# EUROPEAN PATENT SPECIFICATION

(11) **EP 3 049 196 B1**
(45) Date of publication and mention of the grant of the patent: **08.11.2017**
(21) Application number: 14777121.6
(22) Date of filing: 24.09.2014
(51) Int. Cl.: B09B 3/00, C02F 11/10, B01J 20/20, B01J 49/00

(54) **TREATED WASTE PRODUCTS, METHODS OF PREPARING THEM AND USING THE SAME**
BEHANDELTE ABFALLPRODUKTE, VERFAHREN ZUR HERSTELLUNG DAVON UND VERWENDUNG DAVON
DÉCHETS TRAITÉS, PROCÉDÉS DE PRÉPARATION ET D'UTILISATION ASSOCIÉS

(30) Priority: 27.09.2013 GB 201317219
(43) Date of publication of application: 03.08.2016
(73) Proprietor: T&L Sugars Limited, London E16 2EW (GB)
(72) Inventor: KERR, John, London E16 2EW (GB); BAIADA, Anthony, London E16 2EW (GB)
(74) Representative: Gill, Siân Victoria
(86) International application number: PCT/GB2014/052901
(87) International publication number: WO 2015/044659

(56) References cited:
- EP-A2- 0 882 803
- US-A- 3 194 683
- US-A- 4 252 571
- US-A1- 2001 001 453
- "Cane Sugar Refining with Ion Exchange Resins", , 19 September 2011 (2011-09-19), pages 1-48, XP055186778, Retrieved from the Internet: URL:http://www.purolite.com/customized/upl oads/purolite_sugar_cane 111909 final_js.pdf [retrieved on 2015-04-29]

## Description

### Field

The present invention relates to the processing of waste products to produce treated products of potential use and/or value. In particular, the treated products may have adsorbent properties.

### Background

Many processes result in waste products and the disposal of such waste products is becoming increasingly difficult and expensive. Inherently, waste products (or processes with a low atom economy) are not the best use of the earth's natural resources.

Adsorbent materials are used in a wide variety of applications, thanks to their adsorbent properties which may be tailored to the particular materials and species that need to be adsorbed.

### Summary

According to a first aspect of the invention, a method of manufacturing a treated material according to claim 1 is provided. In some embodiments, the starting material further comprises inorganic matter.
In some embodiments, the starting material is a waste product formed during the processing of carbohydrate species. In some embodiments, the carbohydrate species is selected from the group consisting of: sugar; corn; and wheat.

In some embodiments, the starting material comprises a waste product from the sugar refining process.

In the invention, the starting material comprises a waste product formed during a carbonatation process, and/or the starting material comprises a waste product formed during a phosphatation process.

In some embodiments, the starting material comprises precipitated calcium carbonate.
In some embodiments, the starting material comprises phosphate containing scum.

In some embodiments, the starting material comprises precipitated calcium carbonate and phosphate containing scum.
In some embodiments, the starting material comprises ion exchange retentate.

In the invention, the treated material comprises carbon, a charred portion or a carbonised portion.
In some embodiments, the method further comprises washing and drying the treated material.
In some embodiments, the treated material is washed with acid.
In some embodiments, the heat treatment comprises heating the starting material to a temperature from about 200°C to about 1000°C for a period of about 30 minutes to about 5 hours.
In some embodiments, the treated material is activated.
In some embodiments, the inorganic matter comprises one or more selected from the group consisting of: calcium carbonate; calcium phosphate; ash; salts, such as sodium chloride.

According to a second aspect of the invention, an adsorbent material according to claim 8 is provided. In some embodiments, the material adsorbs colour bodies.

According to a third aspect of the invention, use of an adsorbent material according claim 10 is provided, to decolourise a solution comprising a carbohydrate to be refined.
According to a fourth aspect of the invention, use of an adsorbent material according to claim 11 is provided, to adsorb SOx and/or NOx from a gas stream.

According to a fifth aspect of the invention, a process for refining sugar according to claim 12 is provided. In some embodiments, the waste material is treated according to the method according to the first aspect of the invention and the treated material is used in the same process as an adsorbent material.

In some embodiments, the process comprises a first decolourisation step resulting in the waste material, and a second decolourisation step utilising the treated material.
In some embodiments, the first decolourisation step comprises a carbonatation step or a phosphatation step resulting in the waste material and a first treated liquor.
In some embodiments, the first treated liquor is treated in a second decolourisation step in which the liquor is exposed to the treated material.
In some embodiments, the process includes a treatment step using an ion exchange resin, wherein the ion exchange resin must be periodically regenerated and the regeneration results in a waste product comprising inorganic matter and organic matter.

### Brief Description of Drawings

For the purposes of example only, embodiments of the invention are described below with reference to the accompanying drawings, in which:
Figure 1 is a schematic illustration of some illustrative possible processing steps in a sugar refining process.
Figure 2 is a graph illustrating the results of a decolourisation experiment using a control activated carbon material.

### Detailed Description

Many processing methods involve the removal of unwanted components from a starting material. The removed components are frequently present in a waste product, often together with further components which are derived from the starting material or from the process or reaction used in the removal step. Such removal of unwanted components occurs in the processing of crops such as, for example and not limited to, sugar, corn and wheat.

Typically, the waste products are simply disposed of and increasingly, such disposal represents a burden on the manufacturer. It is therefore an aim of the present invention to transform the waste products into useful products. These useful products are referred to herein as co-products or treated products. They are products which have potential value or utility, rather than being by-products or waste products which are simply to be disposed of. In some embodiments, it is a particular aim of the present invention to produce a treated product which may be potentially useful in the overall process from which the waste product is derived.

Attempts to recycle the waste products have been made. For example, JP H11 104490 relates to a process for purifying sugar streams using carbonatation. The waste material produced at the end of the process is calcined, which results in the incineration of organic material and the regeneration of calcium oxide. This material can then be reused in the carbonatation process.

It is also an aim of some embodiments of the invention to enhance the sustainability of the refining process by replacing some of the components (such as reactants and/or adsorbents) used in the refining process with treated materials produced by treating waste products, and optionally which are produced by the same refining process. This can reduce the environmental impact of the refining process both in terms of waste products produced which must be disposed of, and in terms of the products which must be sourced and used in the refining steps.

The treated product is a material with adsorbent properties. Such material is also referred to herein as an "adsorbent material", and it should be noted that adsorbent materials are materials with adsorbent properties, however they are not necessarily used or to be used as adsorbents. In some specific embodiments, the treated product may be utilised in a decolourising step. In other embodiments, the treated product may be used to adsorb constituents of a gas, such as a waste or flue gas, with the constituents to be adsorbed including, for example, NOx, SOx and/or odours. In further embodiments the material may facilitate or catalyse a particular process or reaction via pH control or the presence of specific ions held in specific conformations.

The work reported here is applicable to all sugar refining processes (which will be carried out in factories and plants). The principles involved are applicable to all aspects of sugar processing (for example, beet and cane). What is more, these principles are also applicable to processes which involve the refining or purification of other carbohydrate species including for example, but not limited to, the purification of sweeteners (dextrose, fructose, etc.) from the corn, wheat and other carbohydrate industries, as well as the processing of waste streams from industries including, for example, bio-fermentation industries.

A significant aspect of sugar processing is the safe, sustainable and economically viable removal of impurities from the sucrose moiety through the use of one or more unit operations designed to remove impurities. In addition, the individual unit operations may produce some impurities and/or by-products which need to be removed. Overall, these impurities may be broadly divided into two classes:
i) Organic impurities; and
ii) Inorganic impurities (including "ash" which comprises salts, etc.).

The organic impurities which maybe removed during the processing of the impure (or "raw") stream may comprise a mixture of organic molecules ranging from low molecular weight carboxylic acids to species such as, but not limited to, higher molecular weight waxes, gums and "colour bodies".

The sugar refining process typically involves a number of "decolourisation" steps which may be carried out sequentially. The term "decolourisation" is a generic term used in the sugar industry - the removal of impurities from sugar generally results in the sugar become "whiter" as it becomes more refined. Importantly, as well as the removal of colour bodies, the term "decolourisation" encompasses the removal of suspended solids and turbidity from a liquor stream, and a wide range of organic and inorganic impurities such as, but not limited to, higher molecular weight waxes, gums and any other materials that may be considered to be impurities. The international standard of colour or of relative "whiteness" used in the sugar industry is referred to as the ICUMSA standard (International Commission for Uniform Methods of Sugar Analysis). Low numbers indicate low colour, whilst higher numbers indicate a higher or stronger colour. A good quality white sugar used in the beverage industry may be referred to as having a colour measured as IC₃₅, a pharmaceutical grade sugar maybe IC₂₀, and a "brown" sugar may have an IC 1000 rating, etc.

As there are a range of "colour species" to be removed in the process of sugar refining, it is often necessary for the practitioner to use primary, secondary and tertiary decolourisation processes - each successive process will remove more or less of the different colour bodies contaminating the sugar. The colour bodies removed at each stage may be differentiated on the basis of a number of factors such as, for example: molecular weight, solubility at different pHs, ionic charge, adsorption coefficient on media such as resins and/or activated carbon, etc.

For the avoidance of doubt, the process of decolourisation forms part of the overall refining operation. In the case of sugar refining, decolourisation does not include the steps of milling the sugar cane to separate bagasse (fibrous matter) from the raw sugar (which then undergoes decolourisation).

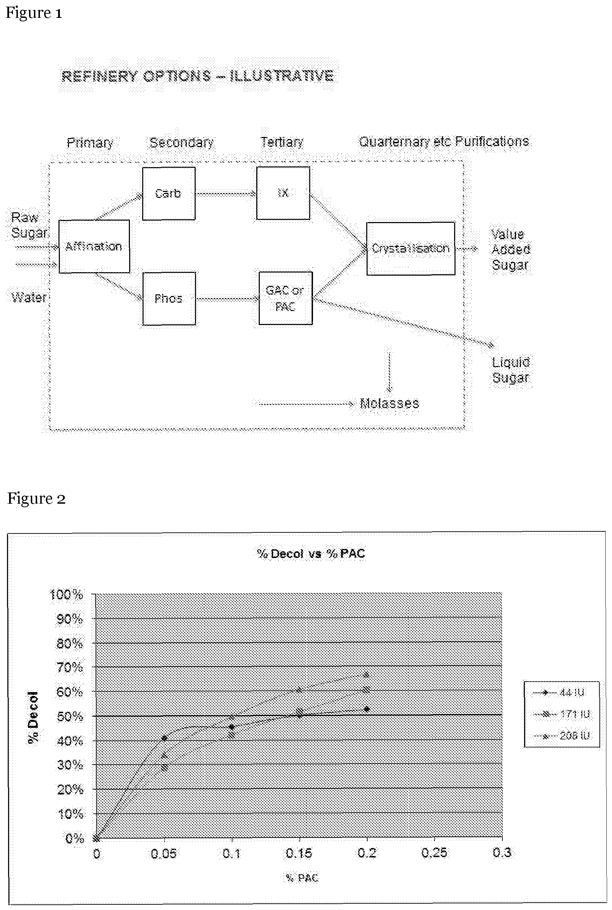

The processing steps typically used in sugar refining are illustrated in Figure 1. The refining process takes (washed) raw sugar and uses a number of steps to remove colour and other impurities before crystallisation of the purified sugar product. An affination step produces molasses as a waste or by-product and affined sugar. This affined sugar is then dissolved in water to form a liquor which is then decolourised in a secondary decolourisation step. This secondary decolourisation step may involve carbonatation, creating precipitated calcium carbonate (PCC) containing colour bodies and other impurities by adding lime and CO₂ to the liquor. The PCC is a waste product and it is removed by filtration from what is then termed the fine liquor. An alternative secondary decolourisation step may involve phosphatation, creating a phosphate-containing scum (PCS) including trapped colour bodies and other impurities (as described, for example, in the British patent specification published as GB1224990). The fine liquor may undergo a further, tertiary, decolourisation step during which it is exposed either to an ion exchange resin, or it is treated using granulated and/or powdered activated carbon. Where an ion exchange resin is used, this will need to be regenerated periodically with a brine solution. The regenerant may undergo nano- and/or diafiltration which results in the production of a further waste product, namely the retentate comprising sodium chloride and colour bodies and other impurities removed by the tertiary decolourisation step.

Thus, irrespective of the particular decolourisation process(es) used, the colour bodies that are removed from the main sugar stream are usually ultimately concentrated into "waste product streams". In some embodiments, for example, decolourisation used in sugar refining may include one or more of the following:
a) The carbonatation process results in a waste precipitated calcium carbonate (PCC) - a mixture or calcium carbonate and organic matter (for example, ca. 6 to 10% by weight organic matter on a solids basis);
b) The phosphatation process results in a waste de-sweetened phosphate-containing scum (PCS) comprising a mixture of calcium phosphate and organic matter (for example, ca. 80% by weight organic matter on a solids basis); and
c) The ion exchange process results in a nanofiltration or diafiltration retentate (referred to herein as the ion exchange retentate or IXR) - a mixture of sodium chloride salt and organic matter (which may be, for example ca. 50 to 99% by weight organics on a solids basis).

The composition of these materials (for example, their homogeneity and the quantity and ratio of organic and inorganic material) is directly affected by the nature of the processes used to make them. Importantly, by virtue of the processes used to make them the organic and inorganic components of these materials are intimately bound. For example, in the case of carbonatation the gradual precipitation of calcium carbonate and the resultant capture of organic material therein provides a material which comprises an intimately bound mixture of calcium carbonate and organic matter (i.e. PCC).

It is, however, becoming increasingly difficult and expensive to dispose of the waste products of sugar processing. For example, it may be necessary to dispose of the PCC produced during the carbonatation step by using it as a low-value soil conditioning medium or burying it in a landfill site. Disposal of PCC by either of these means is not desirable, especially disposal via landfill as this is increasingly costly and has a negative impact on the environment.

In embodiments of the invention, the starting material to be treated is a waste product produced as a result of the carbonatation, phosphatation and/or ion exchange processes used in sugar refining and/or purification. In some embodiments, the starting material may be PCC, PCS and/or IXR. It may, in some embodiments, be desirable to use a single material as a starting material, for example PCC on its own. Alternatively, the starting material maybe a combination of different waste products, such as a combination of PCC and/or PCS and/or IXR.

It is the organic matter within the waste product which can, in particular, contribute to the production and utility of the treated product. The organic component in the waste product is transformed by the treatment step to form the adsorbent portion of the treated product. Therefore, the proportion of the waste product comprising organic matter has an impact on the usefulness of the treated product.

By combining the different materials in this way, it may be possible to tailor the characteristics, such as the pore size distribution, surface area and/or total volume of the treated product.

In the case of sugar refining, different varieties of sugar cane or beet from different sources and/or geographic locations may comprise different quantities of unwanted materials. Thus the composition of the starting material to be treated, such as the quantity and composition of the organic material and colour bodies may vary depending on the source of the sugar cane or beet. Furthermore, some varieties of sugar cane or beet may comprise fewer or more impurities (including colour bodies) to be removed in the decolourisation processes. This variability in the characteristics of the waste material may have an influence on the characteristics of the final treated material, including its pore size distribution, surface area and/or total pore volume.

As mentioned above, individual raw sugars obtained from different sources may, upon decolourisation, produce waste products having different properties and compositions. This may be reflected in the properties of the treated materials produced from the waste products (i.e. treated materials having individual or unique properties maybe produced depending on the source of the raw sugar). It may, in some embodiments, be desirable to utilise the differing properties of the treated materials in different applications.

In some embodiments, it may be more desirable to consistently produce a treated material having predictable and known properties and this may be achieved by blending different classes of PCC prior to the treatment steps used to produce the treated material. Alternatively, the different classes of raw sugar may be blended prior to decolourisation.

Charring is a chemical process of incomplete combustion of certain solids when subjected to high heat under a controlled atmosphere. The resulting residue matter is called char. By the action of heat, charring removes hydrogen and oxygen from the solid, so that the remaining char is composed primarily of carbon. Most solid organic compounds exhibit charring behaviour.

In some embodiments, the formation of a treated material having adsorbent properties from a starting material including organic matter involves charring or carbonisation. In some embodiments, the charred or carbonised portion of the treated material provides the material with its adsorbent properties. Traditional carbonisation is where a starting material with carbon content (for example, the organic matter) is pyrolysed at temperatures in the range 600-900°C, in absence of oxygen (usually in inert atmosphere with gases like argon or nitrogen).

In some embodiments, the starting material does not comprise cellulosic or fibrous material obtained from plant material, such as bagasse.

In some embodiments, the starting material may be in a dry or dried form, or it may be in the form of a paste. Where the starting material is a paste, the moisture may be present in the waste product as it is formed. Alternatively or in addition, water may be added to the waste product to produce a paste with the desired properties such as moisture content, consistency, etc.

In some embodiments, the starting material may be processed to ensure that it is in a suitable and/or desired form (for example, size and shape) before being heat treated. In some embodiments, this may involve grinding the starting material or otherwise changing the particle size. Alternatively, the starting material may be heat treated and then processed into the desired form. In some embodiments, the starting material may be extruded, and this may be a preferred embodiment where the starting material is in the form of a paste.

In some embodiments, the nature of the starting material may be tailored by altering the conditions of the process used to make it. For example, in the case of PCC, the conditions of the carbonatation process may be altered to affect the size and/or shape of the PCC. In addition, by altering the conditions of the carbonatation the amount of organic material incorporated in the PCC maybe tailored.

In embodiments where the starting material is extruded, this step may also apply the heat required to treat the starting material and form the treated material. Extrusion processes may be controlled to expose the material being extruded to an elevated temperature for a predetermined period of time and, in some embodiments, the temperature and time period may be selected to ensure that the starting material, and in particular the organic matter in the starting material, is transformed to produce a treated material with the desired adsorbent properties.

In other embodiments, the starting material is heated to produce the treated material in a furnace or oven, or it may pass through or be held in an area where it is exposed to elevated temperatures. The starting material may alternatively be heated using any suitable heating method such as infra-red, microwave and other commercially available heating techniques. In some embodiments, the starting material is heated in a furnace or an oven.

Different heating techniques or devices may be characterised by the way in which they supply energy to the starting material in order to raise its temperature. For example, heat may be transferred from the outer surface of the starting material to its inner core (i.e. from the "outside-in") by heating it in a furnace or oven. In some embodiments, it may be desirable to heat the starting material using infra-red heating which substantially only heats the outer surface of the starting material. Alternatively, it may be desirable to homogenously heat the material using microwave radiation. In the case of microwave heating, the frequency of the microwaves may be tuned to match the vibration frequency of a particular chemical bond that may be present in the starting material, and this may allow for more efficient and/or targeted heating. Some heating devices may also be more or less suited to providing a defined internal atmosphere within the device. For example, it may be desirable to conduct the heat treatment step in the presence of air, under vacuum, under anaerobic conditions, or in the presence of particular gases, and some heating devices may lend themselves better to this than others.

In some embodiments, the starting material maybe heated using the heat produced by existing on-site boilers.

The precise temperature and/or duration of the heat treatment step will depend upon the properties of the starting material and/or upon the desired properties of the treated material. For example, if the starting material has a high moisture content, such as where the starting material is a paste, the heat treatment step is likely to require a higher temperature or a longer duration in order to produce the desired transformation (such as carbonisation) of the organic matter.

In some embodiments, the heat treatment step involves exposing the starting material to a temperature of at least 200°C. In some embodiments, the temperature is at least about 200, 250, 300, 350, 400, 450, 500, 550, 600, 650,700, 750, 800, 850, 900 or at least about 950°C. Additionally or alternatively, the temperature is no more than about 1200, 1150, 1100, 1050, 1000, 950, 900, 850, 800 or no more than about 750°C.

In some embodiments, the heat treatment step involves exposing the starting material for a period of at least 20 minutes. In some embodiments, the period of exposure to the elevated temperature is at least about 20 minutes, 25, 30, 45, 60, 90,120, 50, 180, 240, 300, 360, 420, 480, 540, or at least about 600 minutes. Additionally or alternatively, the period of exposure to the elevated temperature may be no more than about 1200 minutes, 900, 800, 700, 600, 540, 480, 420 or no more than about 300 minutes.

Optional further processing of the treated material may involve activation (which may also be referred to as oxidation). The treated material, optionally including carbon formed by charring or carbonisation, is exposed to oxidizing atmospheres (oxygen or steam) at temperatures above 250°C, and usually in the temperature range of 600-1200°C.

In some embodiments, the steam used in the activation step may be provided by existing plant equipment. For example, the steam may be generated by heating water using existing on-site boilers.

The treated material according to the present invention may, in some embodiments, be provided with properties similar to those of known activated carbon materials and the treated materials may be used in a similar manner to these known materials.

Traditionally, activated carbon materials are made in particulate form as powders or fine granules less than 1.0 mm in size with an average diameter between 0.15 and 0.25 mm. Thus they present a large surface to volume ratio with a small diffusion distance. Powdered Activated Carbon (PAC) is generally made up of crushed or ground carbon particles, 95-100% of which has a predetermined particle size. Granular Activated Carbon (GAC) is defined as the activated carbon retained on a 50-mesh sieve (0.297 mm). The treated material according to the present invention may be used with a binder to form a bound, agglomerated or an extruded product.

GAC has a relatively larger particle size compared to PAC and, consequently, GACs are frequently used for water treatment, deodorization and separation of components of flow system, whilst PACs may be primarily used for gas phase applications. GAC can be either in granular or extruded form and can be a variety of sizes. Extruded activated carbon (EAC) combines powdered activated carbon with a binder, which are fused together and extruded.

Treated materials such as those disclosed herein comprise pores, and may therefore be described as porous materials. The properties of porous materials such as the pore volume, pore size and the overall surface area may be measured using a variety of analytical techniques and the results interpreted using various mathematical methods, such as Barrett-Joyner-Halenda (BJH) theory; Brunauer, Emmett and Teller (BET) theory; and Langmuir theory. Other methods of analysis and interpretation would be known to the skilled person.

It is well known in the art that the pores of porous materials may be classified according to their size. Pores in a porous material are called "micropores" if their pore size diameter is in the range of less than 2 nm, "mesopores" if their pore size diameter is in the range of 2-50 nm and "macropores" if their pore size diameter is in the range of greater than 50 nm.

Activated carbons, such as granular activated carbon (GAC) and powdered activated carbon (PAC), are thought to be particularly effective adsorbent materials because of their large surface area (which may, for example, be from about 500 m²/g) and they generally have a microporous structure. These materials are versatile adsorbents with high adsorption capacity and a high degree of surface reactivity. They are regularly utilised in the removal or recovery of chemicals and are, for example, used in decolourisation processes such as those in refining processes.

In some embodiments, the treated material disclosed herein may comprise any combination of micropores and/or mesopores and/or macropores. In some embodiments, the average or mean pore size diameter of the treated material may be in the micropore range, in the mesopore range or in the macropore range. In some embodiments, the average or mean pore size diameter of the treated material may be in the mesopore range or the macropore range. In a particular embodiment, the average or mean pore size diameter of the treated material is in the mesopore range.

In some embodiments, the average pore size diameter may be from about 0.1, 1, 2, 3, 4, 5, 6, 7, 8, 9, 10, 15, 20, 25, 30, 35, 40, 45, 50, 55, 60, 70, 80, 90, 100, 200, 300 or 400 nm. The average pore size diameter maybe up to about 500, 400, 300, 200, 100, 90, 80, 70, 60, 55, 50, 45, 40, 35, 30, 25, 20, 15, 10, 9, 8, 7, 6, 5, 4, 3, 2 or 1 nm. In some embodiments, the average or mean pore size diameter may be from about 1 to about 100 nm, from about 10 to about 60 nm, from about 10 to about 50 nm, from about 10 to about 40, or from about 10 to about 30 nm. In particular embodiments, the average pore size diameter may be from about 13 to about 27 or from about 12 to about 57 nm.

In some embodiments, the surface area of the treated material may be from about 1, 2, 3, 4, 5, 6, 7, 8, 9, 10, 20, 30, 40, 50, 100, 150, 200, 300, 400, 500, 600, 700, 800, 900 or 1000 m²/g. The surface area of the treated material may be up to about 2, 3, 4, 5, 6, 7, 8, 9, 10, 20, 30, 40, 50, 100, 150, 200, 300, 400, 500, 600, 700, 800, 900 or 1000 m²/g.

In some embodiments, the surface area of the treated material may be from about 1 to about 10 m²/g, from about 1 to about 5 m²/g, from about 1 to about 4 m²/g, from about 1 to about 3 m²/g or even from about 1 to about 2 m²/g. In one embodiment, the surface area of the treated material may be about 2 m²/g. A person skilled in the art would recognise that treated material having a surface area of about 2 m²/g is much lower than the surface areas associated with traditional adsorbent materials such as GAC and PAC. However, although this surface area is much lower than traditional porous adsorbent materials, the treated materials disclosed herein have been found to be particularly effective when used as adsorbent materials in decolourisation processes (see Experimental). The carbon content of the treated materials of the present invention may be as low as 2% by weight. Therefore, the treated materials of the invention have a large surface area and exhibit excellent adsorption per gram of carbon compared to GAC or PAC. In the invention, the starting material comprises one or more waste products. For example, different waste products from different parts of the waste-producing process may be combined in order to adjust the make up of the starting material. In some embodiments, this allows the properties of the treated product to be controlled or adjusted. For example, in some embodiments, the greater the organic component in the starting material, the greater the carbon component in the treated product.

In addition to the role of the organic matter in the waste product and the starting material, the waste product and starting material may comprise inorganic impurities. In some embodiments, these inorganic impurities contribute to the process and to the properties of the treated product, as will be discussed in greater detail below.
In some embodiments, the inorganic matter present in the starting material may influence the properties of the treated product in one or more ways.

In some embodiments, the inorganic matter may provide a high strength support for the treated product. The treated product may be more or less susceptible to attrition, for example under the processing conditions to which they are exposed when the treated material is used, and the high strength inorganic matter provides some protection from or reduction in such attrition. The quantity of inorganic matter in the starting material also has an influence on the fusion point (i.e. the temperature at which the separate particles of inorganic matter form a larger solid mass). In some embodiments, the fusion point of the inorganic matter maybe particularly affected by the quantity and distribution of cations, particularly monovalent cations, such as sodium and potassium in the organic matter. Other ways of modifying the fusion point would be well known to the skilled person.

The attrition characteristics of the treated product may also be dependent on the ratio of organic material to inorganic material in the starting material. For example, a higher ratio of organic to inorganic material may, in some embodiments, provide a treated material which is particularly susceptible to attrition.

In some embodiments, the treated material made from a starting material with a low inorganic matter content may have a low specific gravity and this could lead to dust problems when the material is employed in a gaseous stream or contamination problems when used in a liquid stream. The presence of inorganic matter in the starting material can, in some embodiments, have an "anchoring" effect in the treated material, increasing the overall specific gravity of the whole which can mitigate these issues to some extent. This may, in some embodiments, be particularly beneficial when the treated material is used to treat gaseous streams.

Furthermore, in some embodiments, the inorganic matter may offer some pH control or adjustment characteristics. For example, if the inorganic matter is calcium carbonate (in effect a weak base), this may be beneficial when the treated material is used as an adsorbent of constituents from an acidic medium such as, for example, acidic flue gases (which may be treated to remove SOx and NOx). The weakly basic treated material may, in some embodiments, facilitate the adsorption of these gas constituents. More specifically, in some embodiments, the calcium carbonate in the starting material may be partially calcined to calcium oxide (a strong base) and this will increase the propensity of the treated material to adsorb ("scrub") acidic gases.

In some further embodiments, the presence of some of the inorganic matter may be used to "activate" the treated material. Thus, for example, it is know that sodium chloride can be used to activate carbon. Thus, waste products which include sodium chloride, for example the nano- and or diafiltration retentate which maybe produced as a waste product in what may be referred to as the tertiary phase of a sugar refining process contains sodium chloride and, without wishing to be bound by theory, it is thought that by heat treating the retentate (for example resulting in charring or carbonisation) such activation can be achieved.

In some embodiments where the inorganic matter in the starting material contains insolubilised phosphate ions (for example, in the form of calcium phosphate or related compounds), then these ions may confer specific colorant removing capabilities in the treated material. This treated material may, for example, be of particular use as an adsorbent in carbohydrate refining processes.

The treated material may be used in the decolourisation steps of sugar processing. When used in decolourisation, the treated material will, over time, adsorb impurities. Eventually, it will become saturated and thus its efficiency will eventually decrease (i.e. the treated material will become "spent"). Rather than disposing of it in a landfill, it may be desirable to regenerate or reactivate the spent treated material. Such regeneration may involve thermal reactivation, whereby the spent treated material is heated and its adsorptive properties reactivated. In some embodiments, the reactivated/regenerated treated material may be reused in the decolourisation processes, optionally in combination with fresh treated material.

In some embodiments, the spent treated material may be thermally reactivated and/or regenerated by heating it using heat generated by the existing on-site boilers. Processing including decolourisation is also used in other industries, for example where naturally-occurring colour bodies are removed. For example, crude triglyceride oils and fats from a wide range of vegetable or animal sources undergo a refining process in order to remove contaminants which may negatively impact the appearance, taste or stability of the final product. Such contaminants include free fatty acids, trace metals, phospholipids, colour bodies and oxidation products. Cottonseed oil is also refined to remove colour bodies. Purification of natural glycerin obtained through high-pressure splitting and transesterification of edible oils and fats may also involve the use of activated carbons to remove organic impurities such as colour bodies, odour-causing substances, and other organic impurities such as aldehydes and chromophores.

The invention is applicable to any food refining industry or related area in which a waste product comprising organic matter is produced which may be treated in accordance with the invention. In some embodiments which may be preferred, the refining process producing the waste product comprising organic matter includes a step which utilises an adsorbent material, in which the treated material having adsorbent properties may be used.

### Exp erimental

### a) Furnace treatment

Waste products were treated by heating in a muffle furnace for a set time at a set temperature. In this work a muffle furnace was used but other forms of heating could be used such as, for example, infra-red, microwave and other commercially available heating techniques.

Depending on the conditions used within the furnace, the organic matter within the waste products was converted into a "charred product". On cooling to room temperature, the cooled charred product resulting from the heat treatment in the muffle furnace was either used: (i) "as is"; or (ii) washed with water, then dried and used; or (iii) washed with water, then washed with acid and then washed with water and dried and then used.

The washing steps were employed to see if the adsorbent activity or properties of these charred products could be enhanced.

The starting material used in the first set of experiments was the PCC formed as a waste product of the carbonatation step of a sugar refining process. The PCC specifically used was taken from an operating sugar refinery. The PCC is a friable material which is produced in the form of a "cake" following filtration. It is typically light brown in colour and comprises approximately 65% solids and 35% water. About 94% by weight of the solids is calcium carbonate, the rest being organic matter.

For each sample, 6 g of the calcium carbonate starting material was heated in a muffle furnace at the temperatures and for the periods of time indicated in Table 1.

**Table 1**

| Exp | CC/g | Temp/°C | Time/hrs | Decol % | Description |
|---|---|---|---|---|---|
| 1i | 6 | NA | NA | 4 | Pure calcium carbonate |
| 1c | 6 | NA | NA | 3 | Precipitated calcium carbonate |
| 1a | 6 | 600 | 2.5 | 14 | Precipitated calcium carbonate |
| 1f | 6 | 500 | 4.5 | 12 | Precipitated calcium carbonate |
| 1g | 6 | 600 | 3.5 | 10 | Precipitated calcium carbonate |

### b) Decolourisation work

Control experiments were completed to illustrate the decolourising effect of commercially available activated carbons under the conditions used in the laboratory tests used to test the treated products.

It should be noted that the experiments used herein are not intended to demonstrate the precise effectiveness of the different materials in adsorbing colour. Rather, the tests are conducted using a relatively short, single "batch" experiment which is not intended to replicate the manner in which the adsorbent materials will be used in an actual decolourisation step or process. Therefore, the extent of decolourisation achieved using the tested materials will be significantly greater if the adsorbent materials are used as current adsorbents are used in existing decolourisation processes.

It is generally known that Powdered Activated Carbon (PAC) is much more efficacious than Granular Activated Carbon (GAC) in removing colour, because it has a significantly higher surface area to mass ratio. The amount and nature of the colour bodies in the liquid to be treated will also have an effect on the decolourising effect of the activated carbon.

The control experiments used commercially available PAC and GAC and exposed these to liquors with different colour content, namely the more coloured 910 IC fine liquor feed and the less coloured 400 IC fine liquor feed. As explained above, the reference to "fine" liquor signifies that this is the liquor which is produced following the carbonatation step and subsequent filtration (to remove the PCC waste product). The colour of such fine liquors will vary based upon the nature of the raw sugar being processed. This natural variation is reflected by the different IC values of the fine liquors used in the experiments described herein.

Results of the control experiments are shown in Table 2. In addition, the results illustrated in the graph of Figure 2 show that the more PAC that is added, the greater the percentage of decolourisation (i.e. the greater the amount of colour that is removed).

**Table 2**

| Exp | AC g | AC % on liquor | Decol % | Description |
|---|---|---|---|---|
| | 0 | 0 | 0 | Control |
| 1h | 0.025 | 0.045 | 11 | Norit PAC (feed Fine Liquor colour=910 IC) |
| 1d | 0.25 | 0.446 | 62 | Norit PAC (feed Fine Liquor colour=910 IC) |
| 721a | 0.2 | 0.357 | 0 | Chemviron GAC (feed Fine Liquor colour=400 IC) |

The adsorbent properties of the treated material were tested by using them in a decolourising processing step. A known mass of the treated material (6 g) was added to a known volume (56 g) of "fine liquor" (from a sugar refinery) and stirred for 20 minutes. In these experiments, the temperature was set at 72°C, but other temperatures and contact times could be used and may have an effect on the adsorbent performance of the treated material.

The liquor was then filtered to separate it from the treated material, and the filtered liquor was tested for colour. The effectiveness of the treated material in decolourising by adsorption was then evaluated by comparing the colour of the fine liquor before and after treatment. The results of the experiments may be seen in Table 1 above. It is clear that the adsorbent properties of the waste product are significantly improved by the heat treatment.

A further set of experiments were then carried out treating a different fine liquor using treated material samples. The fine liquor feed before exposure to the treated material had the lower colour content reflected by its 400 IC rating. Results of these further experiments are shown in Table 3.

**Table 3**

| Exp | CC g | Temp °C | Time hrs | Decol % | Description |
|---|---|---|---|---|---|
| 718a | 10 | NA | NA | 5 | Pure calcium carbonate |
| 722a | 10 | NA | NA | -6 | PCC as is (not heated or treated) |
| 79a | 10 | 600 | 3 | 3 | PCC heated. Black powder, acid treated then water washed and air dried |
| 710a | 10 | 600 | 6 | 4 | PCC heated. Black powder, NO acid or water |
| 711a | 10 | 600 | 3 | 6 | PCC heated. Black powder, NO acid or water |
| 712a | 10 | 600 | 4.5 | 7 | PCC heated. Black powder, NO acid or water |
| 720a | 0 | NA | NA | 57 | Norit PAC DX1 8039-9 0.2 g/56 g FL |
| 721a | 0 | NA | NA | 0 | Chemviron GAC |

The results in Table 3 suggest that the treated PCC had negligible benefit compared with pure calcium carbonate. It should be noted that the GAC also had no decolourisation effect at all. The reason for these results may be that the GAC (and possibly the treated materials) is (are) not very good at removing colour in this experimental set up due to the surface properties of the adsorbent (GAC has a relatively low surface area) and the short contact time.

These experiments included one sample (Sample 79a) in which the treated material was treated with an acid, namely concentrated hydrochloric acid, and then subsequently washed with water and dried. The results in Table 3 indicate that the acid treatment and washing steps did not improve the adsorption properties of the treated product (compare to Sample 711a). However, the reason for this result is not clear from this set of experiments.

The results in Tables 2 and 3 suggest that the adsorbent treated material needs to be tailored to or selected for the liquor to be treated. The treated materials used in these experiments appear to be better suited to decolourising highly coloured liquor feeds.

Further tests were conducted using the waste products including concentrated colour bodies resulting from the processes described in British Patent Publication No. GB2497863, in which a waste product (a regenerant or IXR) is produced when ion exchange resins used in the tertiary purification stage of a sugar refining process (as illustrated in Figure 1) are regenerated. Two different waste products comprising concentrated colour bodies were utilised in this work, namely Samples A and B. The results are set out in Table 4. The nature of the samples is described briefly in the last column. The heating of the starting material resulted in a grey layer corresponding to the material which was heated whilst being exposed to oxygen (in the air present in the furnace), and a black layer which was produced by heating starting material which was not significantly exposed to oxygen during heating and therefore essentially would appear to have undergone pyrolysis.

**Table 4**

| Exp | NF g | Temp °C | Time hrs | Decol % | Description |
|---|---|---|---|---|---|
| 72a | 0.2 | 600 | 2.5 | 19 | NFA: Top grey layer |
| 73a | 0.2 | 600 | 2.5 | 16 | NFA: Top grey layer, water washed, air dried |
| 79a | 0.2 | 600 | 2.5 | 7 | NFA: Bottom black layer, water washed, air dried |
| 710a | 0.2 | 600 | 2.5 | 17 | NFA: Bottom black layer, water - acid - washed, air dried |
| 715a | 0.2 | 600 | 1.5 | 3 | NFB: Water - acid - washed, air dried |
| 716a | 0.2 | 600 | 1.5 | 13 | NFB: Water washed, air dried |
| 717a | 0.2 | 600 | 1.5 | 10 | NFB: No acid or water wash (400 colour fine liquor feed) |
| 1b | 0.2 | 600 | 1.5 | 21 | NFB: No acid or water wash (910 colour fine liquor feed) |

The samples based upon this alternative waste product as the starting material show good adsorption characteristics. Whilst not wishing to be bound by any particular theory, it is hypothesised that the cation content of the waste products used as starting materials to produce these treated materials may play a critical role in their decolourisation characteristics.

Table 5 shows an analysis of some of the cations present in the samples. Sample A has a higher level of calcium/phosphate (and also iron, magnesium and sulphur). It is believed that these ions affect the inherent decolourisation capability of these materials. It is further hypothesised that the inorganic component of the waste product starting materials has a role to play in adsorption.

**Table 5**

| | **Cations (ppm on solids basis)** | | | | | | | |
|---|---|---|---|---|---|---|---|---|
| | **Ca** | **Cu** | **Fe** | **K** | **Mg** | **Na** | **P** | **S** |
| NF A | 143000 | 18 | 1080 | 72 | 977 | 211000 | 78500 | 5830 |
| NFB | 51800 | 19 | 185 | 263 | 298 | 288000 | 24900 | 1720 |
| Ratio A/B | 2.8 | 0.9 | 5.8 | 0.3 | 3.3 | 0.7 | 3.2 | 3.4 |

Table 5 illustrates that the various waste streams contain ions and/or species that may confer beneficial attributes. For example, the phosphate ion may enhance colour adsorption/removal, and other cations may confer other benefits in the treated material (for example, in the activated carbon), such as catalytic properties or pH effects, etc. However, similarly, some of the ions may confer undesirable properties/effects on the final adsorbent material.

In some embodiments, the methods of preparing a treated material may involve one or more steps to pre-treat the starting material so as to remove and/or "leave behind" particular species. In some embodiments, the methods of preparing a treated material may involve one or more steps to treatment the treated material so as to remove and/or "leave behind" particular species. This may allow the method of the present invention to result in treated materials exhibiting optimal technical and commercial performance. In some embodiments, such pre- or post-treatment may involve washing steps, for example using specifically selected solvents or solutions to achieve the desired adjustments to the ions and/or species present in the starting and/or treated material.

Further work was conducted using the phosphate-containing scum (PCS) from the phosphatation step of a sugar refining process shown in Figure 1, as described above. The processing of the PCS waste product, and the results of the decolourisation tests conducted, are set out in Table 6.

**Table 6**

| Exp | PS g | Temp °C | Time hrs | Decol % | Description |
|---|---|---|---|---|---|
| 714a | 0.2 | 600 | 2 | 5 | PS: Black powder after heating "as is" |
| 71a | 0.2 | 600 | 2 | 30 | PS: Black powder - water washed, air dried |
| 75a | 0.2 | 600 | 2 | 7 | PS: Black powder, water - acid- water washed, air dried |

As one can see from the results, the washing of the treated material with water appears to significantly increase or enhance the adsorbent properties, with such materials removing a greater proportion of the colour bodies that the unwashed samples. In contrast, the washing of the treated material with an acid appears to reduce the adsorbent properties. This suggest that at least some of the adsorption of the colour bodies from the liquor may be affected by the chemical species on the surface of the treated material, said species being removed by the acid treatment. It is also noteworthy that the phosphate-containing scum is high in phosphate and Sample 71a shows the best decolourisation performance of all the tested samples.

### c) Admixing of waste streams to give desired charred product properties

Further tests were carried out to investigate the effect of combining different waste streams to tailor the make-up of the starting material, and in particular, to tailor the organic content and the inorganic content, such as the phosphate content.

By mixing the PCC from the carbonatation step, PCS from the phosphatation step and/or other waste products or streams in the correct ratios and heat treating them at the right temperature for the correct period of time it has been possible to make aggregate structures with a high strength.

These experiments involved the treatment of fine liquor (resulting from the carbonatation step following filtration to remove the PCC). The starting material had a starting colour content of 485 IC.

This liquor was decolourised using samples produced by combining multiple waste streams. One of the waste products used was the precipitated calcium carbonate (PCC) produced as a waste product from the carbonatation step and comprising calcium carbonate and organic matter. A second waste product was the phosphate-containing scum (PCS) produced by the phosphatation treatment of the molasses stream formed from sugar refining process (see Figure 1).

Sample 723: A mixture was formed from 1 part dried PCS and 2 parts PCC. These components were mixed and then water was added to form a paste. The paste was then heat treated as indicated in Table 7, resulting in the formation of a black solid material. 0.2 g of the black solid material was used (without further treatment or modification) to treat 56 g of the fine liquor (with a colour content of 485 IC) for 20 minutes at 72°C and the liquor was then filtered and analysed.

Sample 724: A mixture was formed from 1 part dried PCS and 2 parts PCC. These components were mixed and then water was added to form a paste. The paste was then heat treated as indicated in Table 7, resulting in the formation of a black solid material. The black solid was then washed three times in 40 mls of water and dried in an oven. 0.2 g of the washed and dried black solid material was used to treat 56 g of the fine liquor (with a colour content of 485 IC) for 20 minutes at 72°C and the liquor was then filtered and analysed.

Sample 725: A mixture was formed from 1 part dried PCS and 2 parts PCC. These components were mixed and then water was added to form a paste. The paste was then heat treated as indicated in Table 7, resulting in the formation of a black solid material. The black solid was then washed with acid, and then washed three times in 40 mls of water and dried in an oven. 0.2 g of the acid treated and washed black solid material was used to treat 56 g of the fine liquor (with a colour content of 485 IC) for 20 minutes at 72°C and the liquor was then filtered and analysed.

Sample 726: A mixture was formed from 1 part dried PCS and 2 parts PCC. These components were mixed and then water was added to form a paste. The paste was then heat treated as indicated in Table 7, resulting in the formation of a black solid material. 2 g of the solid was used to treat 56 g of the fine liquor (with a colour content of 485 IC) for 20 minutes at 72°C and the liquor was then filtered and analysed.

Sample 727: A mixture was formed from 1 part dried PCS and 2 parts PCC. These components were mixed and then water was added to form a paste. The paste was then heat treated as indicated in Table 7, resulting in the formation of a black solid material. The black solid was then washed three times in 40 mls of water and dried in an oven. 2 g of the solid was used to treat 56 g of the fine liquor (with a colour content of 485 IC) for 20 minutes at 72°C and the liquor was then filtered and analysed. The decolourisation of the fine liquor as a result of exposure to these samples is shown in Table 7.

**Table 7**

| Sample | Temp (°C) | Time (hours) | Colour (IC) | % Removal |
|---|---|---|---|---|
| 723 | 650 | 2.5 | 474 | 2 |
| 724 | 650 | 2.5 | 462 | 5 |
| 725 | 650 | 2.5 | 179 | 63 |
| 726 | 650 | 2.5 | 364 | 25 |
| 727 | 650 | 2.5 | 300 | 38 |

In a further experiment, further samples were used to treat a fine liquor (resulting from the carbonatation step following filtration to remove the calcium carbonate cake). This time the starting material had a starting colour content of 797 IC.

This liquor was decolourised using samples produced by heat treating phosphate-containing scum (PCS) produced by the phosphatation treatment of a molasses stream formed from a mixture of the affination waste stream and the recovery molasses (see Figure 1).

Sample 13a: Dried PCS was heat treated as indicated in Table 8. 0.2 g of the resultant solid was used to treat 56 g of the fine liquor (with a colour content of 485 IC) for 20 minutes at 72°C and the liquor was then filtered and analysed.

Sample 13b: Dried PCS was heat treated as indicated in Table 8. The resultant solid was washed in acid and then washed three times in 40 mls of water and dried in an oven. 0.2 g of the resultant solid was used to treat 56 g of the fine liquor (with a colour content of 485 IC) for 20 minutes at 72°C and the liquor was then filtered and analysed.

Sample 13c: Dried PCS was heat treated as indicated in Table 8. The resultant solid was then washed three times in 40 mls of water and dried in an oven. 0.2 g of the solid was used to treat 56 g of the fine liquor (with a colour content of 485 IC) for 20 minutes at 72°C and the liquor was then filtered and analysed. The decolourisation of the fine liquor as a result of exposure to these samples is shown in Table 8.

**Table 8**

| Sample | Temp (°C) | Time (hours) | Colour (IC) | % Removal |
|---|---|---|---|---|
| 13a | 650 | 2.5 | 776 | 3 |
| 13b | 650 | 2.5 | 448 | 44 |
| 13c | 650 | 2.5 | 742 | 7 |

The desirable properties of the charred products include: (a) high mechanical strength; (b) a defined particle size (to maximize surface area to volume ratio and also to minimize pressure drop in the liquor flow); (c) a high porosity; (d) a high coefficient of adsorption for colour bodies and/or odour moieties and/or SOx/NOx, etc. (for gases); and (e) a defined/desired specific gravity.

Many combinations are possible with the waste streams from a sugar refinery. The phosphate scum seems to be a particularly attractive component for decolourisation.

## Claims

1. A method of manufacturing a treated material having adsorbent properties, the method comprising heating a starting material which is a waste product comprising organic matter so as to form a treated material comprising carbon, a charred portion or a carbonised portion, wherein the starting material comprises a waste product formed during a carbonatation and/or phosphatation decolourisation process.

2. A method as claimed in claim 1, wherein the starting material further comprises inorganic matter and wherein the inorganic matter optionally comprises one or more selected from the group consisting of: calcium carbonate; calcium phosphate; ash; salts, such as sodium chloride.

3. A method as claimed in claim 1 or claim 2, wherein the starting material is a waste product formed during the processing of carbohydrate species and wherein the carbohydrate species is optionally selected from the group consisting of: sugar; corn; and wheat.

4. A method as claimed in any one of the preceding claims, wherein the starting material comprises: (a) a waste product from the sugar refining process; and/or (b) precipitated calcium carbonate; and/or (c) phosphate containing scum; and/or (d) ion exchange retentate.

5. A method as claimed in any one of the preceding claims, wherein the method further comprises washing and drying the treated material and wherein the treated material is optionally washed with acid.

6. A method as claimed in any one of the preceding claims, wherein the heat treatment comprises heating the starting material to a temperature from about 200°C to about 1000°C for a period of about 30 minutes to about 5 hours.

7. A method as claimed in any one of the preceding claims, wherein the treated material is activated.

8. An adsorbent material produced or producible by a method as claimed in any one of the preceding claims.

9. An adsorbent material as claimed in claim 8, wherein the material adsorbs colour bodies.

10. Use of an adsorbent material as claimed in claim 8 or claim 9 to decolourise a solution comprising a carbohydrate to be refined.

11. Use of an adsorbent material as claimed in claim 8 or claim 9 to adsorb SOx and/or NOx from a gas stream.

12. A process for refining sugar, wherein the process comprises a carbonatation and/or phosphatation decolourisation step or steps resulting in a waste material comprising inorganic matter and organic matter; treating the waste material according to a method as claimed in any one of claims 1-7; and utilising the treated material in a decolourisation step of the process and wherein the process optionally comprises a first decolourisation step resulting in the waste material, and a second decolourisation step utilising the treated material.

13. A process as claimed in claim 12, wherein the first decolourisation step comprises a carbonatation step or a phosphatation step resulting in the waste material and a first treated liquor, and wherein the first treated liquor is optionally treated in a second decolourisation step in which the liquor is exposed to the treated material.

14. A process as claimed in claim 12 or claim 13, wherein the process includes a treatment step using an ion exchange resin, wherein the ion exchange resin must be periodically regenerated and the regeneration results in a waste product comprising inorganic matter and organic matter.

## Patentansprüche

1. Verfahren zur Herstellung eines behandelten Materials mit Adsorptionseigenschaften, wobei das Verfahren das Erhitzen eines Ausgangsmaterials beinhaltet, das ein Abfallprodukt ist, das organische Materie beinhaltet, um ein behandeltes Material zu bilden, das Kohlenstoff, einen verkohlten Teil oder einen carbonisierten Teil umfasst, wobei das Ausgangsmaterial ein Abfallprodukt umfasst, das bei einem Carbonatisierungs- und/oder Phosphatierungsentfärbungsprozess gebildet wird.

2. Verfahren nach Anspruch 1, wobei das Ausgangsmaterial ferner anorganische Materie beinhaltet und wobei die anorganische Materie optional eines oder mehrere ausgewählt aus der Gruppe bestehend aus Calciumcarbonat, Calciumphosphat, Asche, Salzen wie Natriumchlorid umfasst.

3. Verfahren nach Anspruch 1 oder Anspruch 2, wobei das Ausgangsmaterial ein Abfallprodukt ist, gebildet beim Verarbeiten der Kohlehydratspezies, und wobei die Kohlehydratspezies optional ausgewählt ist aus der Gruppe bestehend aus Zucker, Mais und Weizen.

4. Verfahren nach einem der vorherigen Ansprüche, wobei das Ausgangsmaterial Folgendes umfasst: (a) ein Abfallprodukt aus dem Zuckerraffinationsprozess; und/oder (b) ausgefälltes Calciumcarbonat; und/oder (c) Abschaum enthaltendes Phosphat; und/oder (d) Ionenaustauschretentat.

5. Verfahren nach einem der vorherigen Ansprüche, wobei das Verfahren ferner das Waschen und Trocknen des behandelten Materials beinhaltet und wobei das behandelte Material optional mit Säure gewaschen wird.

6. Verfahren nach einem der vorherigen Ansprüche, wobei die Hitzebehandlung das Erhitzen des Ausgangsmaterials auf eine Temperatur von etwa 200°C bis etwa 1000°C für eine Periode von etwa 30 Minuten bis etwa 5 Stunden beinhaltet.

7. Verfahren nach einem der vorherigen Ansprüche, wobei das behandelte Material aktiviert wird.

8. Adsorptionsfähiges Material, das mit einem Verfahren nach einem der vorherigen Ansprüche produziert wurde oder produziert werden kann.

9. Adsorptionsfähiges Material nach Anspruch 8, wobei das Material Farbkörper adsorbiert.

10. Verwendung eines adsorptionsfähigen Materials nach Anspruch 8 oder Anspruch 9 zum Entfärben einer Lösung, die ein zu raffinierendes Kohlehydrat umfasst.

11. Verwendung eines adsorptionsfähigen Materials nach Anspruch 8 oder Anspruch 9 zum Adsorbieren von SOx und/oder NOx aus einem Gasstrom.

12. Verfahren zum Raffinieren von Zucker, wobei das Verfahren einen oder mehrere Carbonatisierungs- und/oder Phosphatierungsentfärbungsschritt(e) beinhaltet, der/die in einem Abfallmaterial resultiert/-en, das anorganische Materie und organische Materie umfasst; Behandeln des Abfallmaterials mit einem Verfahren nach einem der Ansprüche 1-7; und Benutzen des behandelten Materials in einem Entfärbungsschritt des Verfahrens, und wobei das Verfahren optional einen in dem Abfallmaterial resultierenden ersten Entfärbungsschritt und einen das behandelte Material nutzenden zweiten Entfärbungsschritt beinhaltet.

13. Verfahren nach Anspruch 12, wobei der erste Entfärbungsschritt einen Carbonatisierungsschritt oder einen Phosphatierungsschritt beinhaltet, der in dem Abfallmaterial und einer ersten behandelten Flotte resultiert, und wobei die erste behandelte Flotte optional in einem zweiten Entfärbungsschritt behandelt wird, in dem die Flotte dem behandelten Material ausgesetzt wird.

14. Verfahren nach Anspruch 12 oder Anspruch 13, wobei das Verfahren einen Behandlungsschritt mit einem Ionenaustauschharz beinhaltet, wobei das Ionenaustauschharz periodisch regeneriert werden muss und die Regeneration in einem Abfallprodukt resultiert, das anorganische Materie und organische Materie umfasst.

## Revendications

1. Procédé de fabrication d'un matériau traité qui possède des propriétés adsorbantes, le procédé comprenant le chauffage d'un matériau de départ qui est un déchet comprenant de la matière organique de façon à former un matériau traité comprenant du carbone, une partie brûlée ou une partie carbonisée, dans lequel le matériau de départ comprend un déchet formé pendant un processus de décoloration par carbonatation et/ou phosphatation.

2. Procédé selon la revendication 1, dans lequel le matériau de départ comprend en outre de la matière inorganique et dans lequel la matière inorganique comprend facultativement une ou plusieurs substances choisies dans le groupe constitué par le carbonate de calcium, le phosphate de calcium, des cendres, des sels tels que le chlorure de sodium.

3. Procédé selon la revendication 1 ou la revendication 2, dans lequel le matériau de départ est un déchet formé pendant le traitement d'une espèce hydrate de carbone et dans lequel l'espèce hydrate de carbone est facultativement choisie dans le groupe constitué par le sucre, le maïs et le blé.

4. Procédé selon l'une quelconque des revendications précédentes, dans lequel le matériau de départ comprend : (a) un déchet issu du processus de raffinage du sucre ; et/ou (b) du carbonate de calcium précipité ; et/ou (c) des écumes contenant du phosphate ; et/ou (d) un rétentat d'échange d'ions.

5. Procédé selon l'une quelconque des revendications précédentes, dans lequel le procédé comprend en outre le lavage et le séchage du matériau traité et dans lequel le matériau traité est facultativement lavé à l'acide.

6. Procédé selon l'une quelconque des revendications précédentes, dans lequel le traitement thermique comprend le chauffage du matériau de départ à une température allant d'environ 200 °C à environ 1000 °C pendant une durée allant d'environ 30 minutes à environ 5 heures.

7. Procédé selon l'une quelconque des revendications précédentes, dans lequel le matériau traité est activé.

8. Matériau adsorbant qui est ou peut être produit par un procédé selon l'une quelconque des revendications précédentes.

9. Matériau adsorbant selon la revendication 8, dans lequel le matériau adsorbe les corps colorés.

10. Utilisation d'un matériau adsorbant selon la revendication 8 ou la revendication 9 pour décolorer une solution comprenant un hydrate de carbone à raffiner.

11. Utilisation d'un matériau adsorbant selon la revendication 8 ou la revendication 9 pour adsorber des SOₓ et/ou NOₓ à partir d'un courant gazeux.

12. Processus de raffinage de sucre, dans lequel le processus comprend une ou plusieurs étapes de décoloration par carbonatation et/ou phosphatation qui donnent un déchet qui comprend de la matière inorganique et de la matière organique ; le traitement du déchet par un procédé selon l'une quelconque des revendications 1 à 7 ; et l'utilisation du matériau traité dans une étape de décoloration du processus, et ledit processus comprend facultativement une première étape de décoloration qui donne le déchet, et une deuxième étape de décoloration qui utilise le matériau traité.

13. Processus selon la revendication 12, dans lequel la première étape de décoloration comprend une étape de carbonatation ou une étape de phosphatation donnant le déchet et un premier jus traité, et dans lequel le premier jus traité est facultativement traité dans une deuxième étape de décoloration dans laquelle le jus est exposé au matériau traité.

14. Processus selon la revendication 12 ou la revendication 13, dans lequel le processus comprend une étape de traitement qui utilise une résine échangeuse d'ions, dans lequel la résine échangeuse d'ions doit être régénérée périodiquement et la régénération donne un déchet comprenant de la matière inorganique et de la matière organique.
